# EUROPEAN PATENT SPECIFICATION

(11) **EP 2 195 119 B1**
(45) Date of publication and mention of the grant of the patent: **03.04.2013**
(21) Application number: 08830410.0
(22) Date of filing: 11.09.2008
(51) Int. Cl.: B05B 7/16, F16L 11/12, F16L 39/00

(54) **HELIX HEATED HOSE**
SPIRALFÖRMIGER ERWÄRMTER SCHLAUCH
TUYAU CHAUFFÉ EN HÉLICE

(30) Priority: 11.09.2007 US 971346 P
(43) Date of publication of application: 16.06.2010
(73) Proprietor: Graco Minnesota Inc., Minneapolis, MN 55413-1894 (US)
(72) Inventor: TIX, Joseph E., Hastings, Minnesota 55033 (US); WEINBERGER, Mark T, Mounds View, Minnesota 55112 (US); RYDER, Douglas S., St. Michael, Minnesota 55376 (US)
(74) Representative: Cloughley, Peter Andrew
(86) International application number: PCT/US2008/075960
(87) International publication number: WO 2009/036127

(56) References cited:
- EP-A2- 0 382 485
- WO-A1-02/37016
- AU-B2- 410 734
- US-A- 4 352 007
- US-A- 5 531 357
- US-A1- 2007 023 090
- US-B2- 7 258 140

## Description

### BACKGROUND ART

Heated hoses are required for use in spraying of various materials such as fast set foams. Such hoses tend to be relatively inflexible and hard for the operator to manage.

AU 410 734 discloses a flexible composite tubing product of indeterminate continuous length adapted to be severed into determinate lengths at the place of application for use in transferring fluid from one point to another. A tubular conveying line member and a tubular heating line member are disposed in contacting heat transferring engagement, the contiguous relationship of said members providing spaces on opposite sides of the region of engagement and extending throughout the length of the members. Flexible filler material occupies said spaces and a thermo-barrier layer is disposed in encompassing relationship around said members and filler material, which provides a heat insulating covering for said members. A flexible sheet of polymeric material is disposed around said thermo-barrier layer to provide a unitary structure.

US 5,531,357 shows a heated hose assembly according to the preamble of the following independent claim 1. Said document discloses a foam delivery system including a pump for delivering a pressurized flow of material to a dispenser through a flexible hose. The hose is encased in a flexible, expansible sheath which contains any material which may leak along the hose. The sheath expands in the region of the leak to accommodate the released material and to indicate the presence of the leak. The system also includes a monitor which senses a leak condition and then terminates the pressurized flow of material.

WO 02/37016 discloses a control device comprising a control line. Said device has a flexible line section which contains a plurality of pressure pipes and extends between a fixed connection unit situated on the drive side, and a connection unit which moves with the door. At least one of said connection units is embodied in the form of a plug-in connector system which can be in a state of coupling or decoupling depending on whether a screw connection is tightened or loosened, and which comprises a coupler plug and a plug receiver for each of the pressure pipes. A securing body is provided, by which means the coupler plugs can be positively locked against a movement in the axial direction of the same in relation to the securing body. Said securing body can be axially secured itself by means of the screw connection.

### DISCLOSURE OF THE INVENTION

According to an aspect of the invention, there is provided a heated hose assembly as defined in claim 1.

Advantegeously, the helix heated hoses use two features to increase the flexibility. The first feature is a braided-copper heating element, which has increased flexibility over the previous solid copper heating element. The element is spiral wound around the hose and held in place with a moisture barrier. The second feature is the helix twist located just before the point where the hoses attach to the manifold. The helix feature is created with the helix support, which initiates the twist around 61cm (24 inches) back from the point of termination. The helix feature works to reduce the moment of inertia about the neutral axis of the two supply hoses. For a traditional heated hoses to flex, one supply hose must compress while the other side is in tension. By making the hoses cross and slide past each other during flexing, the only rigidity felt during flexing is from the stiffness in the hose themselves.

The advantages in the helix heated whip hose is that the force required to pivot the gun from left to right is decreased from 89 to 22,2 N (20 to 5 Ibs) of force. This decrease in force will benefit the spray applicator from arm and wrist fatigue. Test results showed up to a 400% increase in flexibility over a similarly constructed hose without the helix feature

These and other objects and advantages of the invention will appear more fully from the following description made in conjunction with the accompanying drawings wherein like reference characters refer to the same or similar parts throughout the several views.

### BRIEF DESCRIPTION OF DRAWINGS

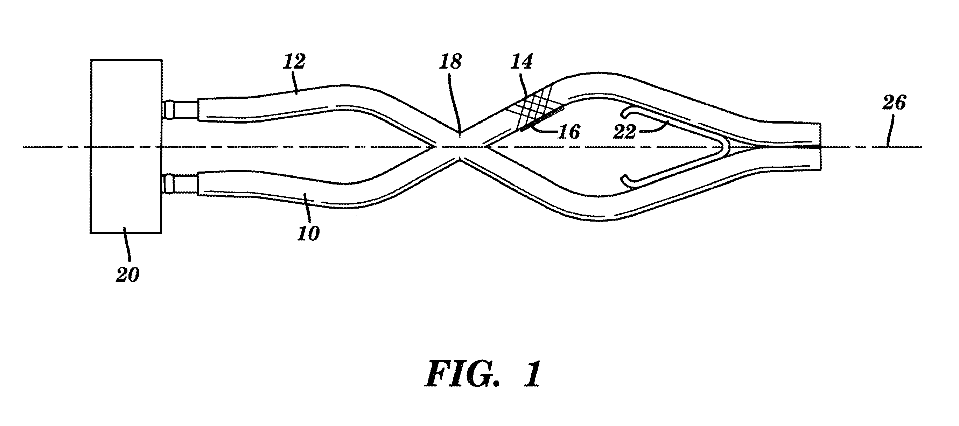

Figure 1 shows a helix heated hose of the instant invention.

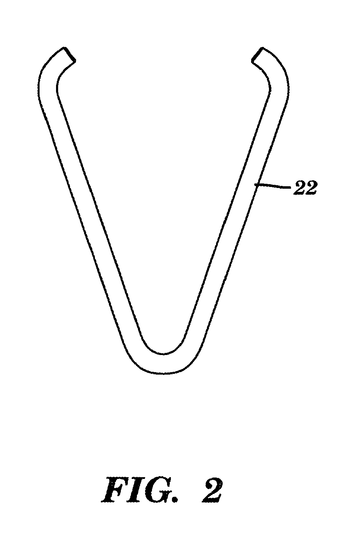

Figure 2 shows the helix support.

### BEST MODE FOR CARRYING OUT THE INVENTION

The first and second helix heated hoses 10 and 12 use two features to increase the flexibility. The first feature is a braided-copper heating element 14, which has increased flexibility over the prior art solid copper heating element. The element is spiral wound around the hose and held in place with a moisture barrier 16. The second feature is the helix twist 18 located just before the point where the hoses 10 and 12 attach to the manifold 20. The helix feature is created with the helix support 22, which initiates the twist around 61cm (24 inches) back from the point of termination. The helix feature works to reduce the moment of inertia about the neutral axis 26 of the two supply hoses 10 and 12. For traditional heated hoses to flex, one supply hose must compress while the other side is in tension. By making the hoses cross and slide past each other during flexing, the only rigidity felt during flexing is from the stiffness in the hose themselves.

The advantages in the helix heated whip hose is that the force required to pivot the gun from left to right is decreased from 89 to 22,2 N (20 to 5 Ibs) of force. This decrease in force will benefit the spray applicator from arm and wrist fatigue. Test results showed up to a 400% increase in flexibility over a similarly constructed hose without the helix feature

It is contemplated that various changes and modifications may be made to the heated hose without departing from the scope of the invention, which is defined by the following claims.

## Claims

1. A heated hose assembly for use with plural component materials, said hose assembly being designed for attachment to a hose manifold (20), said hose assembly comprising:
a first hose (10) attached to said hose manifold (20);
a second hose (12) attached to said hose manifold (20), **characterised by** at least a portion (18) of said first and second hoses (10, 12) being helically wound relative to each other to enhance flexibility; and by
a helix support (22) to position said first and second hoses (10, 12) relative to one another, wherein said helix support (22) is V-shaped.

2. The heated hose assembly of claim 1 wherein each said hose (10, 12) comprises a braided-copper heating element (14).

## Patentansprüche

1. Erwärmte Schlauchbaugruppe zur Verwendung mit mehreren Komponentenmaterialien, wobei die Schlauchbaugruppe dafür aufgelegt ist, an einem Schlauchverteiler (20) befestigt zu werden, wobei die Schlauchbaugruppe Folgendes umfasst:
einen erste Schlauch (10), der an dem Schlauchverteiler (20) angebracht ist;
einen zweiten Schlauch (12), der an dem Schlauchverteiler (20) angebracht ist, **dadurch gekennzeichnet, dass** mindestens ein Anschnitt (18) des ersten und des zweiten Schlauches (10, 12) relative zueinander spiralförmig gewunden sind, um die Flexibilität zu erhöhen; und
dass ein Spiralstützelement (22) vorhanden ist, um den ersten und den zweiten Schlauch (10, 12) relative zueinander zu positionieren, wobei das Spiralstützelement (22) V-förmig ist.

2. Erwärmte Schlauchbaugruppe nach Anspruch 1, wobei jeder Schlauch (10, 12) ein geflochtenes Heizelement aus Kupfer (14) umfasst.

## Revendications

1. Ensemble de tuyau flexible chauffé à utiliser avec des matériaux à pluralité de composants, ledit ensemble de tuyau flexible étant conçu en vue d'une fixation à un embranchement de tuyau flexible (20), ledit ensemble de tuyau flexible comprenant :
un premier tuyau flexible (10) fixé audit embranchement de tuyau flexible (20) ;
un second tuyau flexible (12) fixé audit embranchement de tuyau flexible (20), **caractérisé par** au moins une portion (18) desdites premier et second tuyaux flexibles (10,12) étant enroulés en hélice l'un par rapport à l'autre de manière à accroitre la flexibilité ; et par
un support en hélice (22) pour positionner lesdites premier et second tuyaux flexibles (10,12) l'un par rapport à l'autre, dans lequel ledit support en hélice (22) est en forme de V.

2. Ensemble de tuyau flexible chauffé selon la revendication 1, dans lequel chaque dit tuyau flexible (10,12) comprend un élément de chauffage à cuivre tressé (14).
